# EUROPÄISCHE PATENTSCHRIFT

(11) **EP 1 725 597 B1**
(45) Veröffentlichungstag und Bekanntmachung des Hinweises auf die Patenterteilung: **05.08.2009**
(21) Anmeldenummer: 05715286.0
(22) Anmeldetag: 10.02.2005
(51) Int. Cl.: C08G 18/00

(54) **PHASENSTABILE POLYURETHANPREPOLYMERE**
PHASE-STABLE POLYURETHANE PREPOLYMERS
PRÉPOLYMÈRES DE POLYURÉTHANNE À STABILITÉ DE PHASE

(30) Priorität: 08.03.2004 DE 102004011559
(43) Veröffentlichungstag der Anmeldung: 29.11.2006
(73) Patentinhaber: RATHOR AG, 9050 Appenzell (CH)
(72) Erfinder: NÜTZEL, Rainer, CH-9057 Weissbad (CH)
(74) Vertreter: Thiel, Christian
(86) Internationale Anmeldenummer: PCT/EP2005/001328
(87) Internationale Veröffentlichungsnummer: WO 2005/085310

(56) Entgegenhaltungen:
- EP-A- 0 811 645
- WO-A-95/31493
- WO-A-97/06196
- US-A- 6 133 329
- US-B1- 6 359 022

## Beschreibung

Die Erfindung betrifft eine Prepolymerzusammensetzung, insbesondere zur Erzeugung von Polyurethanschäumen, wobei die Prepolymerzusammensetzung Polyurethanprepolymere enthält aus der Reaktion einer ersten Komponente, welche Polyesterpolyole mit mindestens zwei Hydroxygruppen sowie unpolare Bestandteile umfaßt, und einer zweiten Komponente, welche Polyisocyanate mit mindestens zwei Isocyanatgruppen umfaßt.

Die erfindungsgemäße Prepolymerzusammensetzung dient zur Erzeugung von Polyurethandämmschäumen, deren hauptsächliches Anwendungsgebiet das Bauwesen ist. Sie werden zur Montage von Fenster- und Türzargen und zum Ausschäumen von Hohlräumen, auch in technischen Produkten, bei denen die Hohlräume zur Vermeidung von Schwitzwassernestern verfüllt werden müssen, eingesetzt.

Soweit 1K-Polyurethanschäume angesprochen sind, werden diese durch Ausbringen der Prepolymerzusammensetzung aus Druckbehältern, beispielsweise Aerosoldosen, mit Hilfe von Treibmitteln an Ort und Stelle mit einem Raumgewicht von 10 bis 100 g/l ausgebracht und verarbeitet. 1K-Schäume härten allein mit Hilfe der in der Luft enthaltenen Feuchtigkeit aus, das heißt sie sind unter geeigneten Bedingungen feuchtigkeitshärtend.

Die Prepolymerzusammensetzungen für 2K-Polyurethanschäume benötigen zum Aushärten eine zweite, meist hydroxygruppenhaltige Komponente. In der Regel wird hier ein Polyol unmittelbar vor der Schaumbildung zugesetzt. Die Aushärtung des Polyurethanschaums kann durch Katalysatoren beschleunigt werden. Die typischen Raumgewichte bei 2K-Schäumen liegen bei 10 bis 100 g/l. Die zweite hydroxygruppenhaltige Komponente kann Wasser als Vernetzer enthalten. Das aus der Reaktion mit Wasser entstehende CO₂ unterstützt die Schaumbildung.

Üblich sind aber auch die sogenannten 1,5K-Polyurethanschäume, die Übergangsformen zwischen 1 K- und 2K-Schäumen darstellen. Bei den sogenannten 1,5K-Polyurethanschäumen wird dem Prepolymer vor dem Ausbringen eine zur Umsetzung der darin noch enthaltenen freien Isocyanatgruppen nicht ausreichende Menge einer Hydroxykomponente zugesetzt. Unter den 1,5K-Schäumen werden auch Schaumbildner mit mehr als einer separaten reaktiven Komponente erfaßt.

Herkömmliche Prepolymerzusammensetzungen für Polyurethanschäume enthalten eine Prepolymerkomponente, die einen Mindestgehalt an reaktiven NCO-Gruppen aufweist. Das Prepolymer selbst ist ein Polymer geeigneter Viskosität mit endständigen NCO-Gruppen. Um PU-Prepolymere mit endständigen NCO-Gruppen zu erhalten, ist es üblich, polyfunktionelle Alkohole mit einem Überschuß an monomeren Polyisocyanaten, in der Regel überwiegend Diisocyanat, zur Reaktion zu bringen.

Geeignete herkömmliche Polyisocyanate sind beispielsweise Isophorondiisocyanat, auch als IPDI bezeichnet, Toluylendiisocyanat, auch als TDI bezeichnet, 1,5-Diisocyanatonaphthalin, auch als NDI bezeichnet, Triisocyanatotrimethylmethan, 1,6-Diisocyanatohexan, auch als HDI bezeichnet, und 4,4'-Diisocyanatodiphenylmethan, üblicherweise als MDI bezeichnet. Alle diese Ausgangsmaterialien können in roher Form, d.h. als Gemisch, wie auch in Form der reinen Isomeren oder Abmischungen der Isomeren eingesetzt werden oder auch in Form ihrer reaktiven Derivate verwandt werden. Als reaktive Derivate kommen vor allem dimere und trimere Formen der Isocyanate wie auch deren Biurete und Allophanate in Frage. Wichtig ist eine Funktionalität von ≥ 2.

Zur Herstellung der Polyurethan (PU)-Prepolymere werden die genannten Polyisocyanate mit hydroxygruppenhaltigen Polyethern, Polyestern oder Polyolen umgesetzt, wobei auf eine für den Zweck geeignete Viskosität des dabei entstehenden Prepolymers zu achten ist. Zur Beschleunigung bzw. Herbeiführung der Umsetzung findet diese in Gegenwart von Katalysatoren statt, wobei es sich in der Regel um Katalysatoren auf Amin- oder Carboxylatbasis handelt.

Für die Umsetzung zum Prepolymer können auf dem Gebiet übliche Polyole verwendet werden. Insbesondere haben sich dabei Polyesterpolyole und Polyetherpolyole, wie sie in der Literatur vielfach beschrieben sind, bewährt, insbesondere solche mit einer OH-Zahl im Bereich von 30 bis 350.

In der Bauindustrie zum Einsatz kommende Dämmschäume müssen den nationalen Vorschriften entsprechend feuerhemmend eingestellt sein, weshalb der Zusatz von Flammschutzmitteln bei (PU)-Prepolymeren üblich ist. Als Flammschutzmittel lassen sich, wie sich beispielsweise der WO 94/18268 entnehmen läßt, weichmachende Phosphate oder Phosphonate verwenden. Besonders bewährt hat sich dabei die Verwendung von Tris-(2-chlorpropyl)-phosphat (TMCP). TMCP kann gleichzeitig als Lösungsvermittler zwischen polaren und unpolaren Bestandteilen dienen, siehe EP 0 811 645 A2.

TMCP ist als Flammschutzmittel und Weichmacher gut geeignet, weist jedoch den Nachteil auf, daß es vergleichsweise teuer ist. Aus diesem Grund besteht Bedarf nach preiswerteren Alternativen zu TMCP als Flammschutzmittel, die das TMCP in der Prepolymerzusammensetzung ganz oder teilweise ersetzen können.

Ein solches, preiswerteres Flammschutzmittel stellen beispielsweise Chlorparaffine dar. Die Verwendung von Chlorparaffinen und dergleichen als Flammschutzmittel ist zwar grundsätzlich seit langem bekannt, bislang stellte sich jedoch das Problem, daß bei Verwendung von Polyesterpolyolen und/oder Polyetherpolyolen der Anteil an Chlorparaffinen an der Polyol-Prepolymerkomponente nicht nennenswert über 25 Gew.-% erhöht werden konnte, da anderenfalls eine Entmischung stattfand, welche auf die stark hydrophoben Eigenschaften der Chlorparaffine zurückzuführen ist. Eine Entmischung der Prepolymerzusammensetzung führt aber zu unbrauchbaren Schäumen.

Ausgehend von diesem Stand der Technik stellt sich daher die Aufgabe, eine Prepolymerzusammensetzung auf Polyesterpolyolbasis zur Verfügung zu stellen, die den Zusatz von Chlorparaffinen als Flammschutzmittel in im Vergleich zum Stand der Technik höheren Anteilen erlaubt.

Diese Aufgabe wird erfindungsgemäß gelöst durch eine Prepolymerzusammensetzung der eingangs bezeichneten Art, bei der die erste Komponente chlorparaffine als hydrophobe Bestandteile enthält, wobei die Polyesterpolyole Umesterungsprodukte aus pflanzlichen oder tierischen Ölen mit aromatischen Di- und/oder Tricärbonsäuren und deren Estern und Anhydriden sowie Polyolen sind.

Darüber hinaus betrifft die Erfindung ein Verfahren zur Herstellung der erfindungsgemäßen Prepolymerzusammensetzung, die Verwendung der erfindungsgemäßen Prepolymerzusammensetzung zur Erzeugung von 1K-, 1,5K- und 2K-Polyurethanschäumen sowie Druckdosen und Kartuschen, weiche die erfindungsgemäße Prepolymerzusammensetzung enthalten.

Der Erfindung liegt der Gedanke zugrunde, daß aus einer Umesterungsreaktion von beispielsweise Terephthalsäurepolyethern mit Pflanzenölen deutlich stärker hydrophobe Polyesterpolyole erhalten werden als bei Verwendung von Polyesterpolyolen auf Terephthaisäurebasis selbst. Der Ausgang von Polyethylenterephthalat ist dabei insofern besonders vorteilhaft, als hierfür eine Vielzahl von preiswerten Bezugsquellen zur Verfügung stehen, insbesondere da Polyethylenterephthalat (PET) zur Herstellung von Getränkeflaschen weite Verwendung gefunden hat und als preiswertes Recyclingprodukt anfällt.

Die Herstellung von Polyesterpolyolen durch Umsetzung von Polyethylenterephthalat mit Polyolen und Pflanzenölen ist grundsätzlich aus der US 6 133 329 bekannt. Allerdings dienen diese Polyesterpolyole nicht der Herstellung von Prepolymeren, welche mit einem Treibgas gemischt und in einer Druckdose aufbewahrt werden, um aus ihnen bei Bedarf einen polyurethanschaum, insbesondere zur Verwendung im Bereich des Bauwesens, herzustellen.

Gemäß der US 6 133 329 wird recyceltes Polyethylenterephthalat in einer Mischung von Glykolen, beispielsweise Diethylenglykol, Triethylenglykol, Tetraethylenglykol und/oder Pentaethylenglykol gelöst und für drei Stunden auf 232°C erhitzt. Nach Abkühlen auf 149°C wird nicht umgesetztes Material abfiltriert und das Filtrat mit einem polyfunktionalen Alkohol und einem Pflanzenöl versetzt. Das Gemisch wird bei 232°C und 130 mbar destilliert, bis die zu erwartende Menge Ethylenglykol abgetrennt ist, was das Ende der Reaktion anzeigt. Gegebenenfalls kann zur Beschleunigung der .Reaktion ein Katalysator wie der Chelatkomplex Triethanolamintitanat zugesetzt werden. Gemäß einer alternativen Ausführungsform wird neben dem Pflanzenöl und dem polyfunktionalen Alkohol auch Phthalsäureanhydrid eingesetzt. Phthalsalsäurediester sind ebenfalls einsetzbar, beispielsweise C₁-C₆-Alkylester.

Grundsätzlich ist es möglich, verschiedene Arten von Polyolen zu verwenden, wobei als Polyole im Rahmen dieser Erfindung Verbindungen angesehen werden, die zwei oder mehr Hydroxygruppen enthalten. Neben den erwähnten Glykolen können insbesondere auch Pentaerythritol und Glycerin als Polyol eingesetzt werden.

Als verwendbare Pflanzenöle sind u.a. Sonnenblumenöl, Maiskeimöl, Sojaöl, Rizinusöl, Palmöl, Rüböl oder Erdnußöl zu nennen. Daneben kommen aber auch eine ganze Reihe weiterer Öle pflanzlicher Herkunft, insbesondere mit ungesättigten Fettsäureresten in Frage. Geeignet sind ferner Tallöl sowie eine Vielzahl tierischer Fette und Öle, beispielsweise Fischöl.

Der Anteil an Chlorparaffinen kann in der Prepolymerzusammensetzung im Vergleich zum Stand der Technik deutlich gesteigert werden. War bislang beispielsweise ein Chlorparaffingehalt, bezogen auf die erste Prepolymerkomponente, die die Polyesterpolyole enthält, von höchstens ca. 27 Gew.-% das erreichbare Maximum, so kann nunmehr der Chlorparaffingehalt auf bis zu 70 Gew.-% gesteigert werden. Vorzugweise liegt er somit in einem Bereich von 25 bis 70 Gew.-% bezogen auf die erste Prepolymerkomponente. Gleichzeitig kann der Gehalt anderer Flammschutzmittel, insbesondere TMCP, der bei herkömmlichen Zusammensetzungen ca. 20 Gew.-% der ersten Prepolymerkomponente beträgt, entsprechend gesenkt werden. Idealerweise wird TMCP vollständig ersetzt.

Um die Form-, Phasen- und Dimensionsstabilität der aus der Prepolymerzusammensetzung erzeugten PU-Schäume weiter zu erhöhen, ist es sinnvoll, der ersten Komponente zusätzlich Polyetherpolyole beizumengen, wobei der Gehalt vorzugsweise in einem Bereich von 10 bis 30 Gew.-%, insbesondere bei ca. 20 Gew.-% liegt. Der Anteil der Polyesterpolyole liegt vorzugsweise in einem Bereich von 20 bis 80 Gew.-%, besonders bevorzugt bei 25 bis 45 Gew.-%, bezogen auf die erste Prepolymerkomponente.

Die erfindungsgemäßen Prepolymerzusammensetzungen können des weiteren Pflanzenöle als solche enthalten, beispielsweise Rizinusöl, in einer Menge von bis zu 30 Gew.-%, bezogen auf die erste Prepolymerkomponente.

Um die erfindungsgemäßen Prepolymere selbst herzustellen, werden als zweite Prepolymerkomponente Polyisocyanate benötigt, wobei in diesem Zusammenhang unter Polyisocyanaten solche Verbindungen verstanden werden, die zwei oder mehr Isocyanatgruppen enthalten. In der Regel handelt es sich dabei um Diisocyanate. Damit das Prepolymer noch ausreichend viele NCO-Gruppen enthält, werden die Polyisocyanate üblicherweise im Überschuß eingesetzt. Als besonders geeignet haben sich 4, 4'-Diisocyanatodiphenylmethan (MDI), Isophorondiisocyanat (IPDI) und Toluyelendiisocyanat (TDI) erwiesen. Besonders geeignete Katalysatoren, die die Prepolymerbildung katalysieren, sind tertiäre Amine, insbesondere Derivate des Morpholins, wie z. B. Dimorpholinodimethylether, Dimorpholinodiethylether, Di-(2,6-Dimethylmorpholinoethyl)-ether und N-Methylmorpholin. Weitere bevorzugte tertiäre Amine sind N,N,N',N'-Tetramethylhexan-1,6-diamin, N,N,N',N'-Tetramethylethylendiphenyl-4,4'-diamin, N,N,N',N'-Tetramethylmethylen-Dihexyl-4,4'-diamin, N,N-Dimethylcyclohexylamin, N,N-Dipropylcyclohexylamin, N,N-Dicyclohexylmethylamin. Die vorstehend genannten Katalysatoren können sowohl einzeln als auch in Mischung zur Herstellung der Prepolymerzusammensetzung, einer Polymerzusammensetzung zur Abmischung mit anderen Polyisocyanaten als auch zur Aushärtung des Prepolymers verwendet werden.

Darüber hinaus können die erfindungsgemäßen Prepolymerzusammensetzungen weitere übliche Zusatzstoffe enthalten. Neben den bereits erwähnten Flammschutzmitteln und Katalysatoren zählen dazu Stabilisatoren, Zellöffner, Weichmacher, Emulgatoren, Fungizide, Pigmente und Alterungsschutzmittel. Bei Verwendung der Prepolymerzusammensetzung zur Erzeugung von Druckdosenschäumen ist darüber hinaus ein Treibgas erforderlich, insbesondere Propan, Butan und/oder Dimethylether. Als weitere Treibgase kommen Fluorkohlenwasserstoffe in Frage, die unter den in einem Druckbehälter herrschenden Druckbedingungen verflüssigbar sind, beispielsweise R125, R134a, R143, R152a und R365 mfc. Um den Anteil an brennbaren und halogenhaltigen Treibgasen niedrig zu halten, können weitere Gase zugesetzt werden, die unter den in der Druckdose herrschenden Druckbedingungen nicht kondensierbar sind, beispielsweise CO₂, N₂O oder N₂. Von den genannten Gasen ist insbesondere CO₂ im Treibgas bevorzugt, da es sich zum Teil in der Prepolymerkomponente lösen und dadurch zur Schaumbildung beitragen kann, daneben aber auch als gutes Treibgas wirkt.

Die Treibgaskomponenten machen 5 bis 40 Gew.-% der Prepolymerzusammensetzung aus. Der CO₂-Gehalt kann beispielsweise etwa 5 Gew.-% bezogen auf die gesamte Treibgaskomponente betragen. Der Gehalt an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, max. 12 bar bei 50°C, je nach der einschlägigen nationalen Vorschrift für Druckbehälter (Aerosoldosen). Der Leerraum des Druckbehälters ist der Raum, der von den nicht-kondensierten Bestandteile der Prepolymerzusammensetzung eingenommen wird.

Die erfindungsgemäßen Prepolymerzusammensetzungen lassen sich aus üblichen Druckdosen als 1K-, 1,5K- und 2K-Systeme ausbringen. Bei 1,5K und 2K-Schäumen wird jetzt die zur Aushärtung des Schaums benötigte Polyolkomponente in bekannter Weise getrennt von der Prepolymerzusammensetzung gehalten und erst unmittelbar vor oder bei der Ausbringung hinzugeselzt. Die Verfahren hierzu sind vielfach beschrieben und dem Fachmann ebenso wie dafür geeignete 2K-Druckdosen bekannt.

Neben der Prepolymerzusammensetzung betrifft die Erfindung auch ein Verfahren zur Herstellung einer solchen Prepolymerzusammensetzung, Druckdosen oder Kartuschen zur Ausbringung der Prepolymerzusammensetzung in Form von Polyurethandämmschäumen sowie die Verwendung der Prepolymerzusammensetzung zur Erzeugung von Polyurethandämmschäumen.

Die erfindungsgemäßen Prepolymerzusammensetzungen werden auf für den Fachmann an und für sich bekannte Weise hergestellt, wobei das Prepolymer sowohl in der Druckdose als auch außerhalb hergestellt werden kann. Dem Prepolymer werden dann in der Druckdose die benötigten Zusätze zugegeben, die oben bereits erwähnt wurden. Danach wird die Aerosol-Druckdose verschlossen und das Treibmittel aufgedrückt.

Neben der Verwendung von Druckdosen ist auch die Verwendung von Kartuschen möglich. Hierbei befinden sich die Prepolymerkomponenten treibgasfrei in einer Kartusche, aus der sie mit einem Kolben ausgetrieben werden.

### Beispiele:

Zur Herstellung erfindungsgemäßer phasenstabiler Prepolymerzusammensetzungen wurden Polyolabmischungen A mit Roh-MDI in den nachfolgend ausgegebenen Mischungsverhältnissen in eine Druckdose gegeben und dort mit Treibgas unter Druck versetzt. Alle Abmischungen ergaben phasen- und lagerstabile Produkte mit guten Schaumeigenschaften. Die Polyesterpolyole I und II waren Umesterungsprodukte aus PET mit Glykolen und Sojaöl.

### Polyolkomponente A

| | | | |
|---|---|---|---|
| Polyesterpolyol I | 300 | 270 | 420 |
| Polyesterpolyol II | | 150 | |
| Rizinusöl | 260 | 260 | |
| Chlorparaffin | 420 | 300 | 560 |
| Stabilisator | 10 | 10 | 10 |
| Katalysator | 10 | 10 | 10 |
| | | | |
| Polyolmischung | 270 | 270 | 270 |
| Roh-MDI | 350 | 345 | 345 |
| Dimethylether | 50 | 50 | 55 |
| Propan-/Butangemisch | 75 | 75 | 84 |

| | | | |
|---|---|---|---|
| Alle Einwaagen sind in g. | | | |

## Patentansprüche

1. Prepolymerzusammensetzung, insbesondere zur Erzeugung von Polyurethanmontage- und Dämmschäumen, wobei die Prepolymerzusammensetzung Polyurethanprepolymere enthält aus der Reaktion einer ersten Komponente, welche Polyesterpolyole mit mindestens zwei Hydroxygruppen sowie hydrophobe Bestandteile umfaßt, und einer zweiten Komponente, welche Polyisocyanate mit mindestens zwei Isocyanatgruppen umfaßt, **dadurch gekennzeichnet, daß** die erste komponente Chlorparaffine als hydrophobe Bestandteile enthält, wobei die Polyesterpolyole zumindest teilweise Umesterungsprodukte aus pflanzlichen oder tierischen Ölen mit aromatischen Di- und/oder Tricarbonsäuren, deren Estern oder Anhydriden sowie Polyolen sind.

2. Prepolymerzusammensetzung nach Anspruch 1, **dadurch gekennzeichnet, daß** der Anteil der hydrophoben Bestandteile zwischen 25 und' 70 Gew.-% der ersten Komponente beträgt.

3. Prepolymerzusammensetzung nach Anspruch 1 oder 2, **dadurch gekennzeichnet, daß** zumindest ein Teil der Polyole Glykole sind.

4. Prepolymerzusammensetzung nach einem der Ansprüche 1 bis 3, **dadurch gekennzeichnet, daß** das Polyol zumindest teilweise Pentaerythritol ist.

5. Prepolymerzusammensetzung nach einem der Ansprüche 1 bis 4, **dadurch gekennzeichnet, daß** das Öl Sonnenblumenöl, Maiskeimöl, Sojaöl, Rizinusöl, Palmöl, Rüböl, Erdnußöl, Tallöl, Fischöl oder ein tierisches Fett ist.

6. Prepolymerzusammensetzung nach einem der Ansprüche 1 bis 5, **dadurch gekennzeichnet, daß** der Anteil der Polyesterpolyole zwischen 20 und 80 Gew.-% der ersten Komponente beträgt.

7. Prepolymerzusammensetzung nach einem der Ansprüche 1 bis 6, **dadurch gekennzeichnet, daß** die erste Komponente bis 30 Gew.-% Polyetherpolyole enthält.

8. Verfahren zur Herstellung einer Prepolymerzusammensetzung nach einem der Ansprüche 1 bis 7, bestehend aus folgenden Schritten:
a) Umsetzung von Polyethylenterephthalat, Phthalsäureanhydrid oder Phthalsaurediester mit Polyolen;
b) Umsetzung des Reaktionsprodukts aus Schritt a) mit Pflanzenölen und/oder tierischen Fetten;
c) Zugabe der Chlorparaffine und ggf. von weiteren Zusatzstoffen zur Herstellung einer phasenstabilen ersten Komponente und
d) Umsetzung der ersten Komponente aus Schritt c) mit Polyisocyanaten als zweiter Komponente, wobei die Polyisocyanate mindestens zwei Isocyanatgruppen enthalten.

9. Verfahren nach Anspruch 8, **dadurch gekennzeichnet, daß** der Anteil an Chlorparaffinen zwischen 25 und 70 Gew.-% der ersten Komponente beträgt.

10. Verfahren nach Anspruch 8 oder 9, **dadurch gekennzeichnet, daß** als Polyole zumindest teilweise Glykole verwendet werden.

11. Verfahren nach einem der Ansprüche 8 bis 10, **dadurch gekennzeichnet, daß** als Polyol zumindest teilweise Pentaerythritol verwendet wird.

12. Verfahren nach einem der Ansprüche 8 bis 11, **dadurch gekennzeichnet, daß** als Pflanzenöl Sonnenblumenöl, Maiskeimöl, Sojaöl, Rizinusöl, Palmöl, Rüböl, Erdnußöl, Tallöl, Fischöl oder ein tierisches Fett verwendet wird.

13. Verfahren nach einem der Ansprüche 8 bis 12, **dadurch gekennzeichnet, daß** der Anteil an Polyesterpolyolen zwischen 25 und 45 Gew.-% der ersten Komponente beträgt.

14. Verfahren nach einem der Ansprüche 8 bis 13, **dadurch gekennzeichnet, daß** die erste Komponente bis 30 Gew.-% Polyetherpolyole enthält.

15. Druckdose oder Kartusche mit einer Prepolymerzusammensetzung nach einem der Ansprüche 1 bis 7.

16. Druckdose nach Anspruch 15, **dadurch gekennzeichnet, daß** die Druckdose zusätzlich ein Treibgasgemisch enthält.

17. Verwendung der Prepolymerzusammensetzung nach einem der Ansprüche 1 bis 7 zur Erzeugung von 1K-, 1,5K- oder 2K-Polyurethanschäume.

## Claims

1. Prepolymer composition, in particular for producing polyurethane mounting and insulating foams, said prepolymer composition containing polyurethane prepolymers obtained through the reaction of a first component which contains polyester polyols with at least two hydroxy groups and hydrophobic constituents and a second component containing polyisocyanates having at least two isocyanate groups
**characterized in that** the first component contains chloroparaffins as hydrophobic constituents and the polyester polyols are at least in part transesterification products of vegetable or animal oils with aromatic di- and/or tricarbonic acids, their esters or anhydrides as well as polyols.

2. Prepolymer composition according to claim 1, **characterized in that** the content of hydrophobic constituents ranges between 25 and 70 wt % of the first component.

3. Prepolymer composition according to claim 1 or 2, **characterized in that** at least part of the polyols are glycols.

4. Prepolymer composition according to any one of the claims 1 to 3, **characterized in that** the polyol at least in part is pentaerythritol.

5. Prepolymer composition according to any one of claims 1 to 4, **characterized in that** the oil is sunflower oil, corn oil, soy bean oil, castor oil, palm oil, colza oil, groundnut oil, tall oil, fish oil or an animal fat.

6. Prepolymer composition according to any one of claims 1 to 5, **characterized in that** the content of polyester polyols ranges between 20 and 80 wt % of the first component.

7. Prepolymer composition according to any one of claims 1 to 6, **characterized in that** the first component contains up to 30 wt % of polyether polyols.

8. Method for the production of a prepolymer composition according to any one of claims 1 to 7, consisting of the following steps:
a) Conversion of polyethylene terephthalate, phthalic acid anhydride or phthalic acid diester with polyols;
b) Conversion of the reaction product obtained through step a) with vegetable oils and/or animal fat;
c) Addition of chloroparaffins and, if thought expedient, further additives for the production of a phase-stable first component and
d) Conversion of the first component obtained through step c) with polyisocyanates as second component, said polyisocyanates containing at least two isocyanate groups.

9. Method according to claim 8, **characterized in that** the content of chloroparaffins ranges between 25 and 70 wt % of the first component.

10. Method according to claim 8 or 9, **characterized in that** glycols are used at least in part as polyols.

11. Method according to any one of the claims 8 to 10, **characterized in that** pentaerythritol is used at least in part as polyol.

12. Method according to any one of claims 8 to 11, **characterized in that** as vegetable oil sunflower oil, corn oil, soy bean oil, castor oil, palm oil, colza oil, groundnut oil, tall oil, fish oil or animal fats are used.

13. Method according to any one of claims 8 to 12, **characterized in that** the content of polyester polyols ranges between 25 and 45 wt % of the first component.

14. Method according to any one of claims 8 to 13, **characterized in that** the first component contains up to 30 wt % of polyether polyols.

15. Pressurized container or cartridge with a prepolymer composition according to any one of the claims 1 to 7.

16. Pressurized container according to claim 15, **characterized in that** the pressurized container additionally contains a propellant mixture.

17. Application of the prepolymer composition according to any one of claims 1 to 7 for the production of one-, 1.5- or two-component polyurethane foams.

## Revendications

1. Composition de prépolymères, en particulier pour produire des mousses de montage et mousses isolantes en polyuréthanne, la composition de prépolymères contenant des prépolymères de polyuréthanne issus de la réaction d'un premier composant, qui comprend des polyols de polyester ayant au moins deux groupes hydroxy ainsi que des constituants hydrophobes, et d'un deuxième composant, qui comprend des polyisocyanates ayant au moins deux groupes isocyanates, **caractérisée en ce que** le premier composant contient des chloroparaffines comme constituant hydrophobe et les polyols de polyester sont au moins partiellement des produits d'estérification d'huiles végétales ou animales avec des acides di- et/ou tricarboniques aromatiques, leurs esters ou leurs anhydrides.

2. Composition de prépolymères selon la revendication 1, **caractérisée en ce que** la part des constituants hydrophobes est comprise entre 25 et 70 % en poids du premier composant.

3. Composition de prépolymères selon la revendication 1 ou 2, **caractérisée en ce qu'**au moins une partie des polyols est formée de glycols.

4. Composition de prépolymères selon l'une des revendications 1 à 3, **caractérisée en ce que** le polyol est au moins partiellement du pentaérythritol.

5. Composition de prépolymères selon l'une des revendications 1 à 4, **caractérisée en ce que** l'huile est de l'huile de tournesol, de l'huile de grains de maïs, de l'huile de soja, de l'huile de ricin, de l'huile de palme, de l'huile de navette, de l'huile d'arachide, de la résine liquide, de l'huile de table ou une graisse animale.

6. Composition de prépolymères selon l'une des revendications 1 à 5, **caractérisée en ce que** la part des polyols de polyester est comprise entre 20 et 80 % en poids du premier composant.

7. Composition de prépolymères selon l'une des revendications 1 à 6, **caractérisée en ce que** le premier composant contient jusqu'à 30 % en poids de polyols de polyéther.

8. Procédé de fabrication d'une composition de prépolymères selon l'une des revendications 1 à 7, constitué des étapes suivantes :
a) transformation de polyéthylène-téréphtalate, d'anhydride d'acide phtalique ou de diester d'acide phtalique avec des polyols ;
b) transformation du produit de réaction de l'étape a) avec des huiles végétales et/ou des graisses animales ;
c) ajout de chloroparaffines et éventuellement d'autres additifs afin de fabriquer un premier composant à stabilité de phase ; et
d) transformation du premier composant de l'étape c) avec des polyisocyanates en tant que deuxième composant, les polyisocyanates contenant au moins deux groupes isocyanates.

9. Procédé selon la revendication 8, **caractérisé en ce que** la part des chloroparaffines est comprise entre 25 et 70 % en poids du premier composant.

10. Procédé selon la revendication 8 ou 9, **caractérisé en ce que,** comme polyols, on utilise au moins en partie des glycols.

11. Procédé selon l'une des revendications 8 à 10, **caractérisé en ce que,** comme polyol, on utilise au moins en partie le pentaérythritol.

12. Procédé selon l'une des revendications 8 à 11, **caractérisé en ce que,** comme huile végétale, on utilise de l'huile de tournesol, de l'huile de grains de maïs, de l'huile de soja, de l'huile de ricin, de l'huile de palme, de l'huile de navette, de l'huile d'arachide, de la résine liquide, de l'huile de table ou une graisse animale.

13. Procédé selon l'une des revendications 8 à 12, **caractérisé en ce que** la part des polyols de polyester est comprise entre 25 et 45 % en poids du premier composant.

14. Procédé selon l'une des revendications 8 à 13, **caractérisé en ce que** le premier composant contient jusqu'à 30 % en poids de polyols de polyéther.

15. Boîte pressurisée ou cartouche avec une composition de prépolymères selon l'une des revendications 1 à 7.

16. Boîte pressurisée selon la revendication 15, **caractérisée en ce que** la boîte pressurisée contient en plus un mélange de gaz propulseurs.

17. Utilisation de la composition de prépolymères selon l'une des revendications 1 à 7 pour produire des mousses de polyuréthanne 1K, 1,5K ou 2K.
